**Europäisches Patentamt**

**European Patent Office**

**Office européen des brevets**

(19)

(11) Veröffentlichungsnummer: **0 182 990**
**B1**

(12)

# EUROPÄISCHE PATENTSCHRIFT

(45) Veröffentlichungstag der Patentschrift:
**24.05.89**

(21) Anmeldenummer: **85111607.9**

(22) Anmeldetag: **13.09.85**

(51) Int. Cl.⁴: **B 60 N 1/00**

(54) **Kraftfahrzeugsitz.**

(30) Priorität: **30.11.84 DE 3443703**

(43) Veröffentlichungstag der Anmeldung:
**04.06.86 Patentblatt 86/23**

(45) Bekanntmachung des Hinweises auf die Patenterteilung:
**24.05.89 Patentblatt 89/21**

(84) Benannte Vertragsstaaten:
**DE FR GB IT SE**

(56) Entgegenhaltungen:
**DE-A- 2 630 333**
**DE-A- 2 828 477**
**GB-A- 2 005 998**

(73) Patentinhaber: **Adam Opel Aktiengesellschaft,
Bahnhofsplatz 1 Postfach 1560, D-6090 Rüsselsheim
(DE)**

(72) Erfinder: **Neumann, Bernhard, Böhmerwald Strasse 2,
D-6090 Rüsselsheim 7 (DE)**
Erfinder: **Kreth, Laszlo, Mühlstrasse 63,
D-6102 Pfungstadt (DE)**
Erfinder: **Böttcher, Curd, Dotzhelmer Strasse 171,
D-6200 Wiesbaden (DE)**

(74) Vertreter: **Rosenfeld, Jürgen, Dipl. Ing. et al, Adam Opel
Ag Patentabteilung Bahnhofsplatz 1 Postfach 17 10,
D-6090 Rüsselsheim (DE)**

ACTORUM AG

## Beschreibung

Die Erfindung betrifft einen Kraftfahrzeugsitz, dessen Führungsschienen mittels Schraubbolzen und Muttern am Bodenblech einer Fahrzeugkarosserie befestigbar sind. Weiterhin betrifft die Erfindung eine Montagevorrichtung zur Montage eines solchen Kraftfahrzeugsitzes.

Ein Kraftfahrzeugsitz der eingangs genannten Art ist beispielsweise in der DE-A-2 828 477 beschrieben. Bei dem bekannten Kraftfahrzeugsitz sind die Führungsschienen auf Längsträgern geschraubt, die ihrerseits mittels Schraubbolzen und Muttern auf Verbindungslaschen befestigt sind. Die Verbindungslaschen wiederum werden auf übliche Weise mit dem Bodenblech des Kraftfahrzeugs verschraubt.

Nachteilig bei dem bekannten Kraftfahrzeugsitz ist es, dass eine Vielzahl von Schraubverbindungen erforderlich ist, welche alle von Hand innerhalb der Fahrzeugkarosserie zu erstellen sind. Deshalb eignet sich der Kraftfahrzeugsitz nach dieser Schrift zum Umrüsten eines Kraftfahrzeugs durch Werkstätten, nicht aber für die Serienproduktion in einem Automobilwerk.

Die DE-A 26 30 333 zeigt auch schon eine Sitzbefestigung, bei der im Bodenblech eines Kraftfahrzeugs nach oben ragende Bolzen befestigt sind. Im Fondsitzpolster sind aus weichelastischem Werkstoff bestehende Aufnahmebuchsen vorgesehen, in die jeweils ein Bolzen greift.

Die stehenden Bolzen weisen jeweils eine nach oben gerichtete Spitze auf, um das Aufschieben der Fondsitzpolster auf die Bolzen zu erleichtern. Weiterhin sind am Sitzunterrahmen trichterförmige Ringe vorgesehen, die beim Einführen der Bolzen das Fondsitzpolster mit seinen Aufnahmebuchsen zu den Bolzen hin zentrieren.

Bei dem Kraftfahrzeugsitz nach dieser Veröffentlichung handelt es sich nicht um einen in Führungsschienen angeordneten Sitz. Seine Verankerung mit dem Bodenblech ist ausschliesslich kraftschlüssig, was heutigen Sicherheitsanforderungen nicht entspricht.

Die Erfindung liegt die Aufgabe zugrunde, einen Kraftfahrzeugsitz der eingangs genannten Art so auszubilden, dass eine maschinelle Montage der Führungsschienen auf dem Bodenblech mit einer automatischen Montagevorrichtung möglich ist, wobei das Verschrauben der Führungsschienen mit dem Bodenblech von der Unterseite des Kraftfahrzeugs her ausführbar sein soll. Weiterhin soll eine Montagevorrichtung zur Montage von Kraftfahrzeugsitzen nach der Erfindung geschaffen werden, die eine automatische Sitzmontage erlaubt und bei der das Verschrauben der Führungsschienen von aussen unter dem Bodenblech durchgeführt werden kann.

Die erstgenannte Aufgabe wird erfindungsgemäss dadurch gelöst, dass die Schraubbolzen an den Führungsschienen nach unten weisend befestigt sind und durch Öffnungen von am Bodenblech befestigten Halteteilen hindurchragen, dass an die Halteteile mit den Öffnungen fluchtende, trichterförmige Ringe angesetzt sind, um ein Zentrieren der Schraubbolzen zu ermöglichen und dass das Bodenblech ebenfalls mit den Öffnungen fluchtende Durchlässe aufweist.

Die Verwendung von trichterförmigen Ringen hat den Vorteil, dass sich die Sitze mit den Führungsschienen beim Einsetzen in die Karosserie selbsttätig zentrieren und ein Hin- und Herschieben der Sitze zum Durchstecken der Schrauben durch die hierfür vorgesehenen Öffnungen nicht erfoderlich ist. Die Sitzmontage wird also vereinfacht und erleichtert und es ist möglich, automatische Montagevorrichtungen zu benutzen, die das Einsetzen der Sitze und das Festschrauben der Befestigungsschrauben durchführen, wodurch die Montage beschleunigt wird und Montagekosten eingespart werden.

Vorteilhaft ist es, wenn die trichterförmigen Ringe an die Halteteile angeschweisst sind.

Eine konstruktive sehr einfache Ausführungsform einer erfindungsgemässen Befestigungsvorrichtung besteht darin, dass die Höhe eines jeden trichterförmigen Ringes so gewählt ist, dass der Ring den Zwischenraum zwischen Halteteil und Bodenblech vollständig ausfüllt, wobei der Durchlass im Bodenblech zum Durchstecken des Schraubbolzens ausgebildet ist.

Alternativ hierzu ist es jedoch auch möglich, dass der Durchlass im Bodenblech einen derartigen Durchmesser aufweist, dass durch den Durchlass von aussen die Mutter und ein Werkzeug zum Festdrehen der Mutter auf dem Schraubbolzen einführbar ist.

Das Eindringen von Feuchtigkeit und Schmutz in das Kraftfahrzeug durch den Durchlass kann dadurch verhindert werden, dass der Durchlass im Bodenblech durch einen Stopfen verschliessbar ist.

Die zweitgenannte Aufgabe, nämlich die Schaffung einer Montagevorrichtung zur Montage von Kraftfahrzeugsitzen, wird erfindungsgemäss dadurch gelöst, dass die Montagevorrichtung einen absenkbaren Haltearm zum unverrückbaren Aufsetzen des an seiner Unterseite mit Schienen und Schraubbolzen versehenen Sitzes und einen unteren Ausleger aufweist, wobei an dem Ausleger fluchtend zu den Schraubbolzen in Richtung der Schraubbolzen verfahrbare, motorisch angetriebene Schraubwerkzeuge angeordnet sind und dass die Montagevorrichtung als Ganzes in horizontaler Ebene verschiebbar ist. Eine solche Montagevorrichtung ist sehr einfach aufgebaut, ermöglicht jedoch ein vollautomatisches Montieren von Kraftfahrzeugsitzen auch bei relativ groben Toleranzen der Fahrzeugkarosserie.

Weitere Merkmale und Vorteile der Erfindung können der nachfolgenden Beschreibung eines Ausführungsbeispiels der Erfindung anhand der Zeichnung entnommen werden. In der Zeichnung zeigen

Fig. 1 einen Schnitt durch eine Führungsschiene eines Kraftfahrzeugsitzes mit den angrenzenden Bauteilen,

Fig. 2 einen der Figur 1 entsprechenden Querschnitt durch eine zweite Ausführungsform des Kraftfahrzeugsitzes,

Fig. 3 eine schematische Darstellung der Montage eines Kraftfahrzeugsitzes mit der erfindungsgemässen Montagevorrichtung.

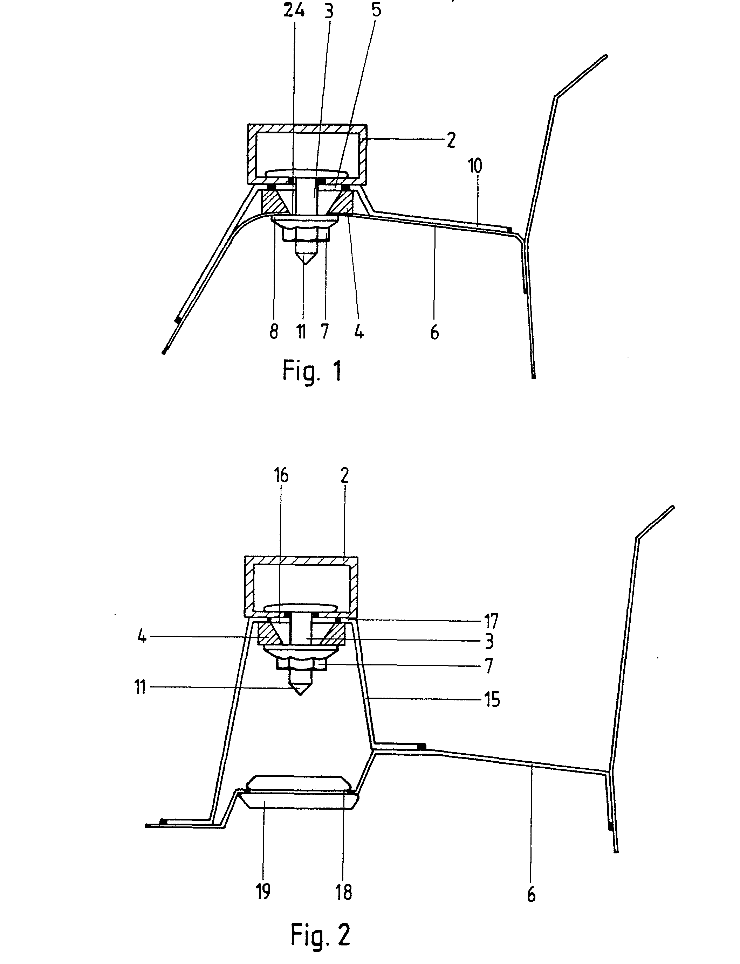

In den Figuren 1 und 2 ist der Einfachheit halber der Kraftfahrzeugsitz nicht dargestellt, sondern nur eine mit dem Kraftfahrzeugsitz verbundene Führungsschiene 2. An der Führungsschiene 2 ist ein Schraubbolzen 3 befestigt, der durch einen trichterförmigen Ring 4 und einen Durchlass 24 im Bodenblech 6 hindurchragt und mit einer Mutter 7, gegebenenfalls unter Zwischenschaltung einer Unterlegscheibe 8, am Bodenblech 6 festgeschraubt ist. Der trichterförmige Ring 4 ist an einem Halteteil 10 koaxial unterhalb einer Öffnung 5 des Halteteils 10 festgeschweisst und stützt sich am Bodenblech 6 ab. Der Ring 4 kann auch am Bodenblech 6 direkt befestigt werden, wodurch das Halteteil 10 enthält. Zur besseren Führung im Ring 4 ist der Schraubbolzen 3 mit einer kegelförmigen Spitze 11 versehen.

Wenn die Führungsschiene 2 in einem grösseren Abstand zum Bodenblech 6 verläuft, dann kommt die Ausführungsform nach Figur 2 in Betracht. Hier ist das Halteteil 15 nach oben gezogen und der trichterförmige Ring 4 liegt nicht mehr auf dem Bodenblech 6 auf. Er ist an einer eine Öffnung 16 bildenden Abwinklung 17 des Halteteiles 15 angeschweisst und stellt das Widerlager für die Mutter 7 dar. Da der Schraubbolzen 3 nicht mehr durch das Bodenblech 6 hindurchragt, ist in diesem ein Durchlass 18 zum Einführen eines Steckschlüssels für die Mutter 7 vorgesehen, der nach Festziehen der Mutter 7 durch einen Stopfen 19 verschlossen wird.

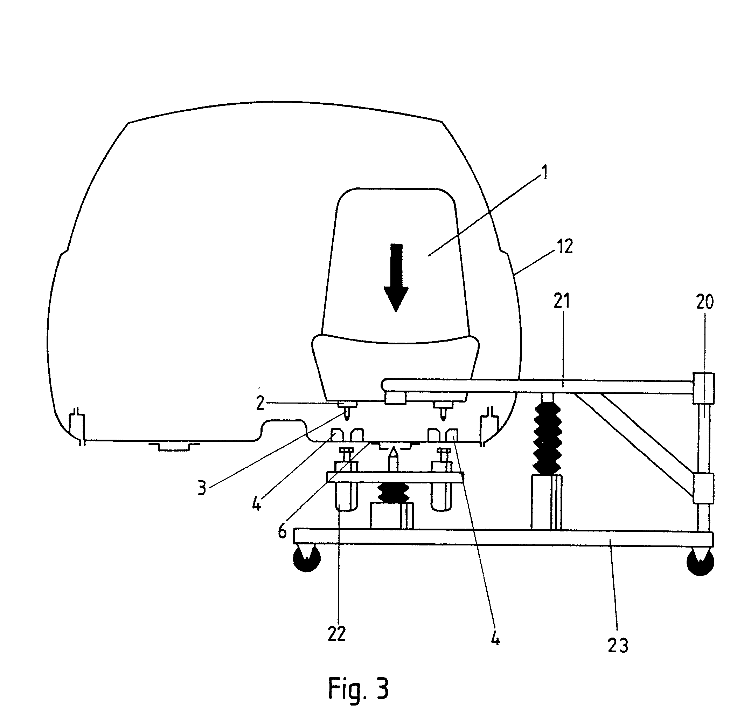

Die Montage des Kraftfahrzeugsitzes 1 in der Fahrzeugkarosserie unter Verwendung einer automatischen Montagevorrichtung 20 geht aus Figur 3 hervor. Die Montagevorrichtung 20 hat einen Haltearm 21, auf der Kraftfahrzeugsitz 1 aufgesetzt und von dem der Kraftfahrzeugsitz 1 in die Fahrzeugkarosserie 12 hineingeschoben wird. Beim Absenken des Haltearmes 21 erfolgt die selbsttätige Zentrierung des Kraftfahrzeugsitzes 1 durch die am Bodenblech 6 angeordneten, trichterförmigen Ringe 4 und die Spitzen 11 der Schraubbolzen 3. Da die Montagevorrichtung 20 den Kraftfahrzeugsitz 1 festhält, werden bei der Zentrierung des Kraftfahrzeugsitzes 1 durch die trichterförmigen Ringe 4 auch die mit der Montagevorrichtung 20 fest verbundenen, an einem unteren Ausleger 23 der Montagevorrichtung 20 angeordneten, unter dem Bodenblech 6 befindlichen und motorisch angetriebenen Schraubwerkzeuge 22 so ausgerichtet, dass beim Anheben der Schraubwerkzeuge 22 die eingesetzten Muttern 7 genau auf die Schraubbolzen 3 treffen. Die Schraubwerkzeuge 22 drehen dann die Muttern 7 auf die Schraubbolzen 3 auf und ziehen sie fest. Nach Absenken der Schraubwerkzeuge 22 wird der Haltearm 21 der Montagevorrichtung 2 wieder aus der Fahrzeugkarosserie 12 herausgezogen und der nächste Kraftfahrzeugsitz 1 kann montiert werden. Die Sitzmontage erfolgt also automatisch und erfordert keine manuelle Tätigkeit.

**Patentansprüche**

1. Kraftfahrzeugsitz (1), dessen Führungsschienen (2) mittels Schraubbolzen (3) und Muttern (7) am Bodenblech (6) einer Fahrzeugkarosserie (12) befestigbar sind, dadurch gekennzeichnet, dass die Schraubbolzen (3) an den Führungsschienen (2) nach unten weisend befestigt sind und durch Öffnungen (5, 16) von am Bodenblech (6) befestigten Halteteilen (10, 15) hindurchragen, dass an die Halteteile (10, 15) mit den Öffnungen (5, 16) fluchtende, trichterförmige Ringe (4) angesetzt sind, um ein Zentrieren der Schraubbolzen (3) zu ermöglichen und dass das Bodenblech (6) ebenfalls mit den Öffnungen (5, 16) fluchtende Durchlässe (18, 24) aufweist.

2. Kraftfahrzeugsitz nach Anspruch 1, dadurch gekennzeichnet, dass die trichterförmigen Ringe (4) an die Halteteile (10, 15) angeschweisst sind.

3. Kraftfahrzeugsitz nach Anspruch 1 oder 2, dadurch gekennzeichnet, dass die Höhe eines jeden trichterförmigen Ringes (4) so gewählt ist, dass der Ring (4) den Zwischenraum zwischen Halteteil (10) und Bodenblech (6) vollständig ausfüllt, wobei der Durchlass (24) im Bodenblech (6) zum Durchstecken des Schraubbolzens (3) ausgebildet ist (Fig. 1).

4. Kraftfahrzeugsitz nach Anspruch 1 oder 2, dadurch gekennzeichnet, dass der Durchlass (18) im Bodenblech (6) einen derartigen Durchmesser aufweist, dass durch den Durchlass (18) von aussen die Mutter (7) und ein Werkzeug zum Festdrehen der Mutter (7) auf dem Schraubbolzen (3) einführbar ist (Fig. 2).

5. Kraftfahrzeugsitz nach Anspruch 4, dadurch gekennzeichnet, dass der Durchlass (18) im Bodenblech (6) durch einen Stopfen (19) verschliessbar ist.

6. Montagevorrichtung zur Montage von Kraftfahrzeugsitzen nach einem der Ansprüche 1 bis 5, dadurch gekennzeichnet, dass die Montagevorrichtung einen absenkbaren Haltearm (21) zum unverrückbaren Aufsetzen des an seiner Unterseite mit Schienen (2) und Schraubbolzen (3) versehenen Sitzes (1) und einen unteren Ausleger (23) aufweist, wobei an dem Ausleger (23) fluchtend zu den Schraubbolzen (3) in Richtung der Schraubbolzen (3) verfahrbare, motorisch angetriebene Schraubwerkzeuge (22) angeordnet sind und dass die Montagevorrichtung als Ganzes in horizontaler Ebene verschiebbar ist.

**Revendications**

1. Siège (1) de véhicule automobile dont les rails-guides (2) peuvent être fixés, au moyen de vis (3) et d'écrous (7), à la tôle de plancher (6) d'une carrosserie (12) de véhicule automobile, caractérisé par le fait que les vis (3) sont fixées aux rails-guides (2) en étant tournées vers le bas et traversent des ouvertures (5, 16) de pièces de maintien (10, 15) fixées à la tôle de plancher (6), par le fait que des anneaux en forme d'entonnoir (4), alignés sur les ouvertures (5, 16), sont rapportés sur les pièces de maintien (10, 15), afin de permettre un centrage des vis (3), et par le fait que la tôle de plancher (6) présente des ajours (18, 24) également alignés sur les ouvertures (5, 16).

2. Siège de véhicule automobile selon revendication 1, caractérisé par le fait que les anneaux en forme d'entonnoir (4) sont rapportés par soudage sur les pièces de maintien (10, 15).

3. Siège de véhicule automobile selon revendication 1 ou 2, caractérisé par le fait que la hauteur de chaque anneau en forme d'entonnoir (4) est choisie de manière que l'anneau (4) remplisse complètement l'intervalle entre pièce de maintien (10) et tôle de plancher (6), l'ajour (24) dans la tôle de plancher (6) étant aménagé pour être traversé par la vis (3) (figure 1).

4. Siège de véhicule automobile selon revendication 1 ou 2, caractérisé par le fait que l'ajour (18) dans la tôle de plancher (6) présente un diamètre tel que l'écrou (7) et un outil pour visser et serrer celui-ci (7) sur la vis (3) puissent être introduits depuis l'extérieur, au travers de l'ajour (18) (figure 2).

5. Siège de véhicule automobile selon revendication 4, caractérisé par le fait que l'ajour (18) dans la tôle de plancher (6) est obturable par un bouchon (19).

6. Dispositif de montage, pour monter des sièges de véhicules autmobiles selon l'une des revendications 1 à 5, caractérisé par le fait que ce dispositif de montage présente un bras de support (21) pouvant être abaissé pour la dépose, sans déport latéral, du siège (1) dont le côté dessous est muni de rails (2) et de vis (3), et un bras inférieur (23) sur lequel sont agencés, dans l'alignement des vis (3), des outils de vissage (22) entraînés par moteur et déplaçables en direction des vis (3), et par le fait que le dispositif de montage dans son ensemble peut être déplacé en translation dans un plan horizontal.

## Claims

1. Motor vehicle seat (1), the guide rails (2) of which can be attached to the floor panel (6) of a vehicle body (12) by means of nuts (7) and bolts (3), characterised in that the bolts (3) are mounted on the guide rails (2), pointing downwards, and pass through openings (5, 16) in holding members (10, 15) mounted on the floor panel (6), funnel-shaped rings (4) aligned with the openings (5, 16) are attached to the holding members (10, 15) to allow centring of the bolts (3), and the floor panel (6) also comprises apertures (18, 24) aligned with the openings (5, 16).

2. Motor vehicle seat according to claim 1, characterised in that the funnel-shaped rings (4) are welded to the holding members (10, 15).

3. Motor vehicle seat according to claim 1 or 2, characterised in that the height of each funnel-shaped ring (4) is selected so that the ring (4) completely fills the gap between holding member (10) and floor panel (6), wherein the aperture (24) in the floor panel (6) is designed for passage of the bolt (3) (Fig. 1).

4. Motor vehicle seat according to claim 1 or 2, characterised in that the aperture (18) in the floor panel (6) has a diameter such that the nut (7) and a tool for tightening the nut (7) on the bolt (3) can be introduced through the aperture (18) from the outside (Fig. 2).

5. Motor vehicle seat according to claim 4, characterised in that the aperture (18) in the floor panel (6) can be sealed by a plug (19).

6. Assembly device for the assembly of motor vehicle seats according to any of claims 1 to 5, characterised in that the assembly device comprises a holding arm (21) which can be lowered for immovably mounting the seat (1) which is provided on its underside with rails (2) and bolts (3), and a lower cantilever arm (23), wherein on the cantilever arm (23) in alignment with the bolts (3) are disposed motor-driven spanners (22) which are movable in the direction of the bolts (3), and the assembly device as a whole is displaceable in a horizontal plane.

Fig. 1

Fig. 2

2/2

Fig. 3